# EUROPÄISCHE PATENTSCHRIFT

(11) **EP 1 642 037 B1**
(45) Veröffentlichungstag und Bekanntmachung des Hinweises auf die Patenterteilung: **14.05.2008**
(21) Anmeldenummer: 04738698.2
(22) Anmeldetag: 14.06.2004
(51) Int. Cl.: F16C 11/04, B60N 2/20

(54) **LAGERANORDNUNG FÜR EIN KRAFTFAHRZEUG**
BEARING ARRANGEMENT FOR A MOTOR VEHICLE
ENSEMBLE PALIER POUR UN VEHICULE AUTOMOBILE

(30) Priorität: 25.06.2003 DE 10329237
(43) Veröffentlichungstag der Anmeldung: 05.04.2006
(73) Patentinhaber: Brose Fahrzeugteile GmbH & Co. KG, Coburg, 96450 Coburg (DE)
(72) Erfinder: KRÖNER, Gregor, 96120 Bischberg (DE)
(74) Vertreter: Baumgärtel, Gunnar
(86) Internationale Anmeldenummer: PCT/DE2004/001247
(87) Internationale Veröffentlichungsnummer: WO 2005/005847

(56) Entgegenhaltungen:
- DE-A- 19 731 305
- DE-A- 19 756 728
- US-A- 4 979 263

## Beschreibung

Die Erfindung betrifft eine Lageranordnung für ein Kraftfahrzeug nach dem Oberbegriff des Anspruchs 1.

Eine derartige Lageranordnung umfasst eine Lagerstelle in Form einer Lageröffnung eines Basisteiles, bei dem es sich beispielsweise um einen Verstellhebel oder ein tragendes Teil (Sitzseitenteil) eines Kraftfahrzeugsitzes handeln kann, sowie ein die Lageröffnung axial durchgreifendes Lagerelement, z. B. in Form eines Lagerbolzens.

Eine derartige Lageranordnung eignet sich insbesondere zur Bildung eines Radiallagers für ein Lagerelement einer Verstelleinrichtung in Kraftfahrzeugen, z. B. für einen Lagerbolzen einer Sitzverstelleinrichtung. Die Lagerung soll möglichst unbeeinflusst von Toleranzen sein, um Spiel und Lagergeräusche zu vermeiden. Hierzu ist es bekannt, einen mit einer Schneide versehenen Lagerbolzen zu verwenden, der sich in die entsprechende Lagerstelle selbsttätig einarbeitet. Dies hat jedoch den Nachteil erhöhter Kosten für das Lagerelement (Lagerbolzen mit Schneide) sowie einer aufwendigen Montage.

Der Erfindung liegt daher das Problem zugrunde, eine Lageranordnung der eingangs genannten Art weiter zu verbessern, insbesondere im Hinblick auf eine einfache Herstellbarkeit und Montierbarkeit unter Vermeidung von Toleranzen.

Dieses Problem wird erfindungsgemäß durch die Schaffung einer Lageranordnung mit den Merkmalen des Patentanspruchs 1 gelöst.

Danach weist das Basisteil am Rand der Lageröffnung mindestens einen (durch plastische Deformation verformten) Deformationsbereich auf, der von dem Rand der Lageröffnung radial nach innen absteht und (zur Bildung eines Radiallagers) als radiale Stützstelle für das Lagerelement wirkt.

Die Erfindung beruht auf der Erkenntnis, dass eine von Toleranzen weitgehend unbeeinflusste (radiale) Lagerung eines Lagerelementes (vorzugsweise in Form eines Lagerbolzens) in einer Lageröffnung dadurch erreicht werden kann, wenn am Rand der Lageröffnung (radial) nach innen vorspringende Deformationsbereiche vorgesehen sind, die als radiale Stützstellen für das Lagerelement wirken.

Gemäß einer ersten Variante zur Schaffung der erfindungsgemäßen Lageranordnung wird das Lagerelement in die Lageröffnung eingesetzt, bevor die Deformationsbereiche derart verformt werden, dass sie vom Rand der Lageröffnung nach innen abstehen. Die Querschnittsabmessungen des Lagerelementes einerseits und der Lageröffnung andererseits sind dabei derart aufeinander abgestimmt, dass das Lagerelement mit radialem Spiel in der Lageröffnung angeordnet ist. Anschließend erfolgt eine begrenzte Verformung des Randes der Lageröffnung in den Deformationsbereichen, bis diese unter möglichst vollständiger Kompensation des radialen Spiels an dem Lagerelement anliegen. Nach einer zweiten Variante zur Schaffung der erfindungsgemäßen Lageranordnung werden die Deformationsbereiche schon vor dem Einführen des Lagerelementes in die Lageröffnung derart verformt, dass sie (radial) nach innen (in Richtung auf das Zentrum der Lageröffnung) vortreten, und zwar so weit, dass unter Berücksichtigung der nach innen vortretenden Deformationsbereiche der für das Einführen des Lagerelementes in die Lageröffnung zur Verfügung stehende Querschnitt (lichte Durchmesser) der Lageröffnung geringfügig kleiner ist als die Querschnittsabmessung des Lagerelementes. Beim anschließenden Einführen des Lagerelementes in die Lageröffnung erfolgt dann eine solche Rückdeformation der Deformationsbereiche, dass das Lagerelement spielfrei unter einer gewissen elastischen Verspannung in der Lageröffnung gelagert ist.

Bei der erfindungsgemäßen Lageranordnung weist also die Lageröffnung als solche, ohne die radial nach innen vorspringenden Deformationsbereiche, in ihrer Querschnittsabmessung bzw. in ihrem Durchmesser ein Übermaß auf, so dass das Lagerelement dort - ohne Berücksichtigung der nach innen vorspringenden Deformationsbereiche - mit erheblichem Spiel gelagert wäre. Erst durch die nach innen abstehenden Deformationsbereiche, die beim oder nach dem Einfügen des Lagerelementes in die Lageröffnung derart verformt werden, dass sie exakt an der äußeren Oberfläche des Lagerelementes anliegen und dort als radiale Stützstellen wirken, wird das Radiallager komplettiert.

Hierzu weist der mindestens eine Deformationsbereich, der von dem Rand der Lageröffnung zur Bildung einer radialen Stützstelle für das Lagerelement nach innen absteht, im Vergleich zu den weiteren, radial nicht nach innen verlagerten Randbereichen der Lageröffnung (sowie im Vergleich zu dem Lagerelement) eine geringere Steifigkeit gegenüber radial wirkenden Kräften auf, d.h., er wird unter der Wirkung einer vorgegebenen radialen Kraft eher deformiert als die übrigen Randbereiche (bzw. das Lagerelement).

Insbesondere ist der mindestens eine Deformationsbereich der Lageröffnung zumindest teilweise durch mindestens einen Schwächungsbereich des Basisteiles begrenzt, so dass sich der Deformationsbereich zwischen diesem Schwächungsbereich und der Lageröffnung erstreckt.

Entlang des Randes der Lageröffnung können mehrere Deformationsbereiche nebeneinander angeordnet sein, die die Lageröffnung entlang ihres gesamten Umfanges umfassen oder sich nur über einen Teil des Umfanges der Lageröffnung erstrecken, und zwar insbesondere entlang eines solchen Teiles, an dem im Betrieb des Lagers die geringeren Radialkräfte wirken.

Die den Deformationsbereichen zugeordneten Schwächungsbereiche können beispielsweise durch Ausnehmungen des Basisteiles gebildet werden. Gemäß einer Ausführungsform, die insbesondere bei dünnen Basisteilen (mit einer Dicke von weniger als 2 mm) bevorzugt wird, ist die jeweilige Ausnehmung als Durchgangsöffnung ausgebildet, die das Basisteil durchgreift. Gemäß einer anderen Ausführungsform, die bevorzugt bei dickeren Basisteilen angewendet wird, ist die Ausnehmung als Aussparung in Form einer Materialverdrängungsstelle ausgebildet, die in das Basisteil eingreift, dieses jedoch nicht vollständig durchgreift. Durch die Tiefe der jeweils zugeordneten Aussparung (Materialverdrängungsstelle) wird die Größe des Deformationsbereiches bestimmt sowie insbesondere dessen Deformierbarkeit und Tragfähigkeit.

Gemäß einer Weiterbildung der Erfindung, insbesondere für dünne Basisteile, sind jedem Deformationsbereich der Lageröffnung zwei durch einen Steg voneinander getrennte Schwächungsbereiche zugeordnet, wobei der Deformationsbereich sich zwischen dem Steg und der Lageröffnung erstreckt. Der Steg dient dabei zur Kopplung des Deformationsbereiches an weitere Bereiche des Basisteiles, insbesondere zur Übertragung radial wirkender Kräfte, und lässt gleichzeitig eine hinreichende Verformbarkeit des Deformationsbereiches zu, so dass das Lagerspiel vollständig ausgeglichen werden kann.

Das Lagerelement selbst ist vorzugsweise derart aufgebaut, dass es einerseits einen Lagerabschnitt aufweist, der zur radialen Lagerung des Lagerelementes in der Lageröffnung dient, sowie andererseits einen Verbindungsabschnitt, z. B. in Form eines Außengewindes, über den das Lagerelement mit einer weiteren Baugruppe verbindbar ist.

Ein Verfahren zur Herstellung einer erfindungsgemäßen Lageranordnung ist durch die Merkmale des Patentanspruchs 20 charakterisiert. Danach wird der mindestens eine Deformationsbereich der Lageröffnung derart plastisch deformiert, dass er als radiale Stütze für eine spielfreie Lagerung des Lagerelementes wirkt. ("Spielfrei" bedeutet dabei, dass durchaus noch eine relative Drehbewegung von Lagerelement und Lageröffnung möglich sein soll, wobei jedoch die Lageröffnung das Lagerelement "ohne Klappern" radial abstützt.)

Gemäß einer Variante des erfindungsgemäßen Verfahrens wird der Deformationsbereich nach dem Einfügen des Lagerelementes mittels eines Werkzeugs, z. B. durch Schlag mit einem Körmer, derart radial nach innen verformt, dass er das Lagerelement radial abstützt.

Nach einer anderen Variante des erfindungsgemäßen Verfahrens stehen schon vor dem axialen Einführen des Lagerelementes in die Lageröffnung die Deformationsbereiche von der Lageröffnung radial nach innen ab, und zwar derart, dass das Lagerelement ein Übermaß bezüglich des - unter Berücksichtigung der nach innen abstehenden Deformationsbereiche - zur Verfügung stehenden Querschnittes der Lageröffnung aufweist. In diesem Fall werden die Deformationsbereiche beim Einführen des Lagerelementes in die Lageröffnung wieder teilweise radial nach außen verformt, so dass sich selbsttätig ein optimaler (spielfreier) Sitz des Lagerelementes in der Lageröffnung einstellt, wobei eine elastische Restverspannung verbleibt.

Weitere Merkmale und Vorteile der Erfindung werden bei der nachfolgenden Beschreibung von Ausführungsbeispielen anhand der Figuren deutlich werden.

Es zeigen:

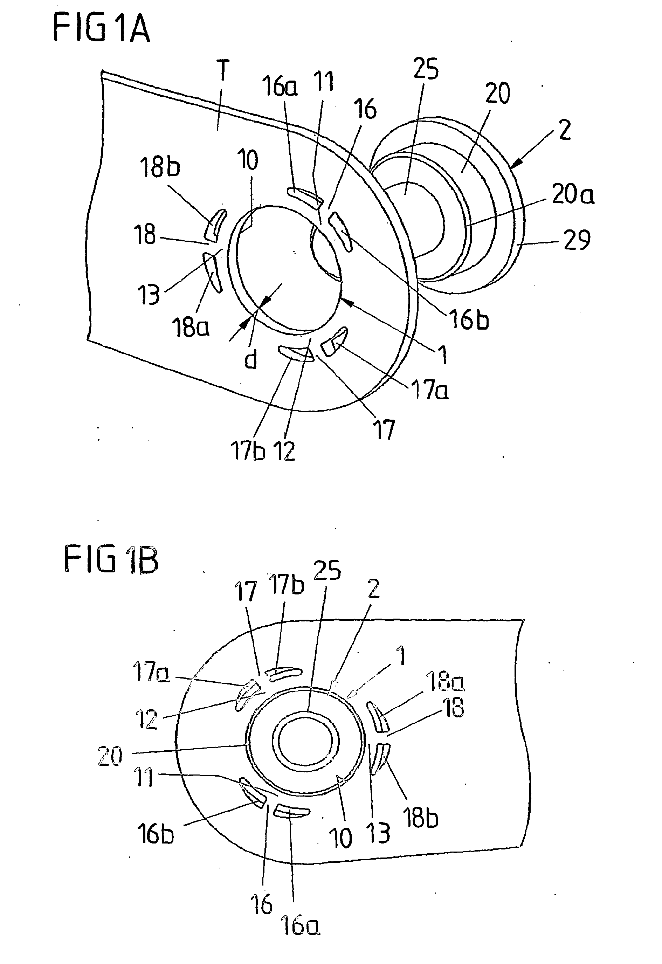

- Fig. 1a: einen Verstellhebel eines Kraftfahrzeugsitzes mit einer Lageröffnung und einem zugeordneten Lagerbolzen in perspektivischer Darstellung;
- Fig. 1b: eine Draufsicht auf die Lageranordnung aus Figur 1a nach dem Einführen des Lagerbolzens in die Lageröffnung;
- Fig. 1 c: die Lageranordnung aus Figur 1b nach einem radialen Verformen des Randes der Lageröffnung;
- Fig. 1d: eine Explosionsdarstellung der Lageranordnung aus Figur 1 c;
- Fig. 2a: ein zweites Ausführungsbeispiel einer Lageranordnung mit einem eine Lageröffnung aufweisenden Verstellhebel eines Kraftfahrzeugsitzes und einem zugeordneten Lagerbolzen in perspektivischer Darstellung;
- Fig. 2b: eine zweite perspektivische Darstellung der Lageranordnung aus Figur 2a;
- Fig. 2c: die Lageranordnung aus den Figuren 2a und 2b nach dem axialen Einführen des Lagerbolzens in die Lageröffnung, wobei Bereiche des Randes der Lageröffnung radial nach außen verformt wurden;
- Fig. 3a: eine Abwandlung der Lageranordnung aus den Figuren 1a bis 1d und 2a bis 2c hinsichtlich der Ausbildung der Lageröffnung in einem Sitzseitenteil;
- Fig. 3b: einen Schnitt durch die Lageröffnung aus Figur 3a;
- Fig. 4a bis 4c: ein Verfahren zur Herstellung einer Lageröffnung mit einem bezüglich einer Mittelebene der Lageröffnung symmetrischen Deformationsbereich am Rand der Lageröffnung;
- Fig. 5a und 5b: eine erste Abwandlung des Verfahrens aus den Figuren 4a bis 4c;
- Fig. 6a und 6b: eine zweite Abwandlung des Verfahrens aus den Figuren 4a bis 4c.

In Figur 1a ist ein Basisteil T in Form eines z.B. aus Metall (Blech) bestehenden, schwenkbar an einem Sitzseitenteil zu lagernden Verstellhebels für einen Kraftfahrzeugsitz dargestellt, der eine von einem kreisförmigen inneren Rand 10 umschlossene, gestanzte Lageröffnung 1 aufweist. Dieser Lageröffnung 1 ist ein Lagerelement 2 in Form eines Lagerbolzens mit einem Lagerabschnitt 20 und Einführfase 20a zugeordnet, von dem einerseits ein mit einem Außengewinde versehener Verbindungsabschnitt 25 absteht und an dem auf der gegenüberliegenden Seite ein Kopf 29 angeordnet ist. Der Lagerabschnitt 20 dient zur radialen Lagerung des Lagerbolzens 2 am Rand 10 der Lageröffnung 1 und mittels des Kopfes 29 kann sich der Lagerbolzen 2 axial an dem Verstellhebel T abstützen. An dem Verbindungsbereich 25 kann mittels des dort vorgesehenen Außengewindes eine weitere Baugruppe eines Kraftfahrzeugsitzes, wie z. B. ein mit dem Lagerbolzen 2 zu verbindendes Sitzseitenteil, befestigt werden, bezüglich der der Verstellhebel T mittels der Lageranordnung 1, 2 bestehend aus der Lageröffnung 1 und dem Lagerbolzen 2 verschwenkbar ist.

Entlang des Umfangs der Lageröffnung 1 und radial etwas von dieser beabstandet, sind drei Schwächungsbereiche 16, 16a, 16b; 17, 17a, 17b und 18, 18a, 18b vorgesehen, die in einem Winkelabstand von jeweils 120° angeordnet sind. Jeder der Schwächungsbereiche wird gebildet durch zwei entlang des Umfangs der Lageröffnung 1 erstreckte, gestanzte Durchgangsöffnungen 16a, 16b; 17a, 17b; 18a, 18b, die jeweils durch die gesamte Dicke d des Verstellhebels T hindurch verlaufen, sowie einen zwischen den jeweils zwei Durchgangsöffnungen verlaufenden Steg 16, 17, 18. Zwischen dem jeweiligen Schwächungsbereich 16, 16a, 16b; 17, 17a, 17b; 18, 18a, 18b und der Lageröffnung 1 erstreckt sich jeweils ein (noch nicht verformter) Deformationsbereich 11, 12, 13 am Rand 10 der Lageröffnung 1. Der jeweilige Deformationsbereich 11, 12, 13 ist durch den zugeordneten Schwächungsbereich 16, 16a, 16b; 17, 17a, 17b; 18, 18a, 18b von dem Verstellhebel T teilweise entkoppelt und somit durch radial von außen wirkende Kräfte einfacher deformierbar als die übrigen Bereiche des Randes 10 der Lageröffnung 1. Mit anderen Worten ausgedrückt weisen die Deformationsbereiche 11, 12, 13 eine geringere Steifigkeit gegenüber radial wirkenden äußeren Kräften auf.

Figur 1b zeigt die Lageranordnung aus Figur 1a nach dem axialen Einführen des Lagerbolzens 2 in die Lageröffnung 1. Es ist erkennbar, dass der Innendurchmesser der Lageröffnung 1 ein Übermaß hinsichtlich des Außendurchmessers des Lagerabschnittes 20 des Lagerbolzen 2 aufweist, so dass die Außenwand des Lagerabschnittes 20 von dem inneren Rand 10 der Lageröffnung 1 (unter Bildung sogenannter Lagerluft) in radialer Richtung beabstandet ist. Der Rand 10 der Lageröffnung 1 bildet somit noch kein spielfreies Radiallager für den Lagerabschnitt 20 des Lagerbolzens 2.

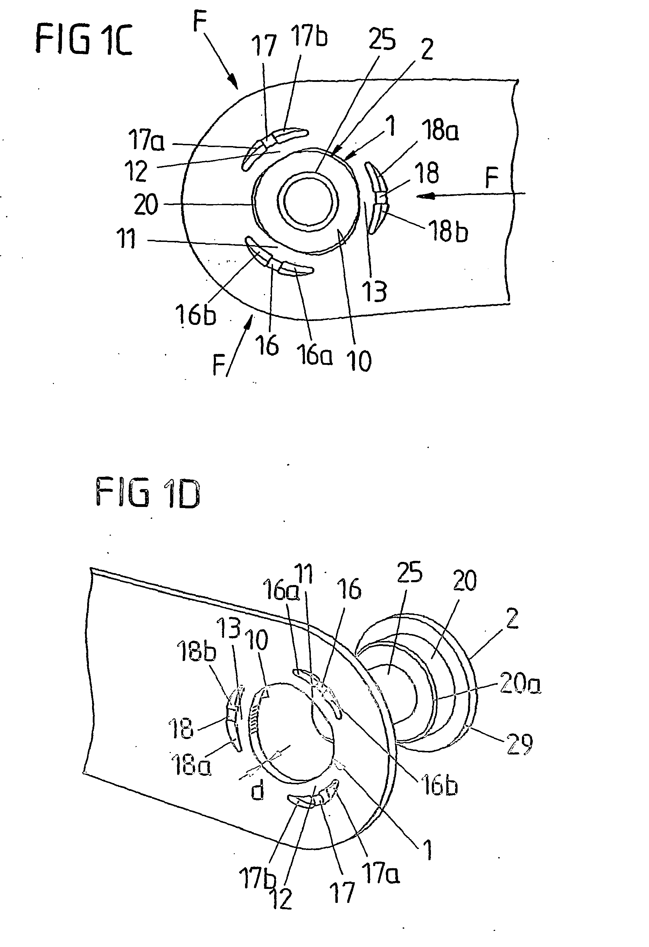

Hierzu werden vielmehr gemäß Figur 1c mittels eines Werkzeugs, z. B. durch Verpressen der Stege 16, 17, 18, radial bezüglich der Lageröffnung 1 wirkende Kräfte F auf die Deformationsbereiche 11, 12, 13 des Randes 10 der Lageröffnung 1 ausgeübt, so dass die Deformationsbereiche 11, 12, 13 sich radial nach innen verformen, sich an den äußeren Umfang des Lagerabschnittes 20 des Lagerbolzens 2 anlegen und diesen nach Art eines Radiallagers radial abstützen. Die Einleitung der radial wirkenden Kräfte in den jeweiligen Deformationsbereich 11, 12, 13 erfolgt dabei über den Steg 16, 17, 18 des zugeordneten Schwächungsbereiches 16, 16a, 16b; 17, 17a, 17b; 18, 18a, 18b, so dass der jeweilige Deformationsbereich 11, 12, 13 in seinem radial vor dem jeweiligen Steg 11, 12, 13 liegenden Teilabschnitt am Weitesten nach innen vorspringt, vergleiche auch die Explosionsdarstellung in Figur 1d.

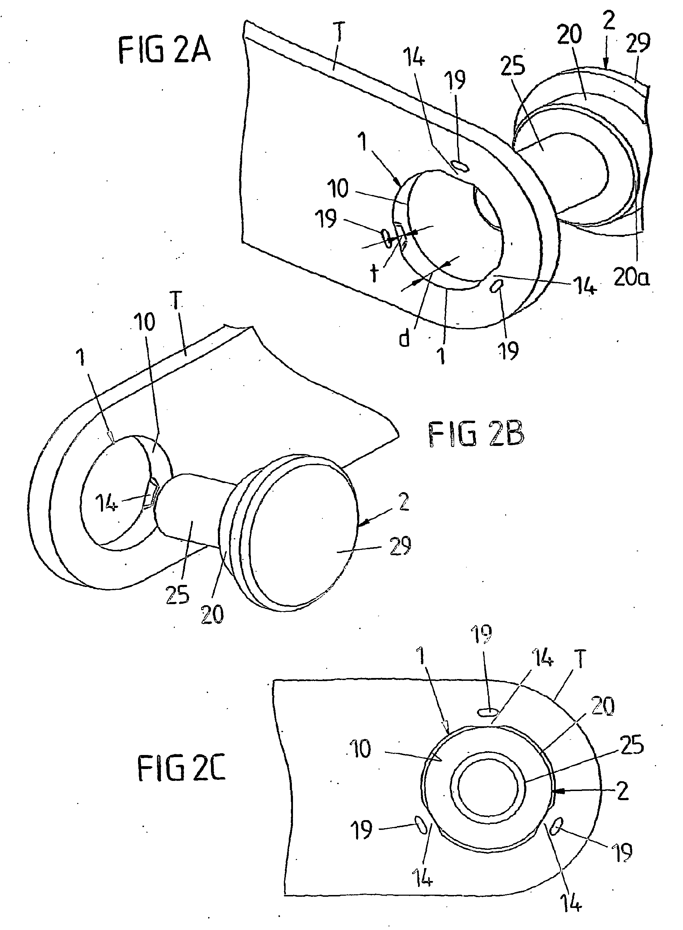

In den Figuren 2a und 2b ist eine Abwandlung der Lageranordnung aus den Figuren 1a bis 1d dargestellt, bei der das den Verstellhebel T bildende Blechteil eine größere Dicke d aufweist als in dem Ausführungsbeispiel gemäß Figur 1 und die Deformationsbereiche 14 sich nur über einen Teil der Dicke d des Blechteiles erstrecken. Die bereits radial vom Rand 10 der Lageröffnung 1 nach innen vorspringenden Deformationsbereiche 14 wurden gebildet als Folge der Erzeugung von Aussparungen 19 in Form von Materialverdrängungsstellen nahe jenes Randes 10, die den Verstellhebel T nicht vollständig durchgreifen, sondern lediglich bis zu einer Tiefe t < d in diesen eigreifen.

Ein wesentlicher Unterschied verglichen mit der Lageranordnung aus den Figuren 1a bis 1d besteht darin, dass die Deformationsbereiche 14 bereits vor dem Einsetzen des Lagerbolzens 2 in die Lageröffnung 1 radial nach innen gerichtete Vorsprünge bilden. Diese Vorsprünge stehen soweit nach innen ab, dass in diesem Fall der Außenumfang des Lagerabschnittes 20 des Lagerbolzens 2 ein Übermaß hinsichtlich des Innenumganges der Lageröffnung unter Berücksichtigung der durch die Deformationsbereiche 14 gebildeten, radial nach innen gerichteten Vorsprünge aufweist.

Dementsprechend werden vorliegend beim Einführen des Lagerbolzens 2 mit seinem Lagerabschnitt 20 mit Fase 20a (von der Rückseite der Deformationsbereiche 14) in die Lageröffnung 1 und bei dessen Einschrauben mit seinem Gewindeabschnitt 25 in eine zugeordnete Baugruppe die Deformationsbereiche 14 am Rand 10 der Lageröffnung 1 teilweise radial nach außen verdrängt, bis der Lagerabschnitt 20 des Lagerbolzens 2 und die nach innen gerichteten Vorsprünge 14 des Randes 10 der Lageröffnung 1 eine Passung bilden, die die gewünschte radiale Abstützung und Lagerung des Lagerabschnittes 20 in der Lageröffnung 1 gewährleistet.

Bei beiden vorstehend erläuterten Ausführungsbeispielen einer Lageranordnung wird die Leicht- bzw. Schwergängigkeit des Lagerbolzens 2 in der Lageröffnung 1 jeweils durch die Anzahl und Steifigkeit der Deformationsbereiche bestimmt, über die sich der Lagerbolzen 2 mit seinem Lagerabschnitt 20 radial abstützen kann. Je näher die Aussparungen 19 (Materialverdrängungsstellen) am Rand der Lageröffnung liegen, desto stärker ist ihre Wirkung als Schwächungsbereiche (Rückdeformationsbereiche). Bei der in den Figuren 2a bis 2c dargestellten Lageranordnung ist hierfür ferner die axiale Tiefe t der Deformationsbereiche 14 maßgeblich.

Bei den in den Figuren 1a bis 1d und 2a bis 2c dargestellten Lageranordnungen sind die Deformationsbereiche jeweils über den gesamten Umfang der jeweiligen Lageröffnung 1 verteilt. Dies ist dadurch bedingt, dass vorliegend der jeweilige, an einem Sitzseitenteil befestigte Lagerbolzen 2 ein feststehendes Element der Lageranordnung bildet und der Verstellhebel T bezüglich des Lagerbolzens verschwenkbar ist, so dass je nach Schwenklage des Verstellhebels T jeweils unterschiedliche Bereiche des Randes 10 der Lageröffnung 1 durch die über den Verstellhebel T eingeleiteten Gewichtskräfte (Gewicht des durch den Verstellhebel T zu verstellenden Sitzteiles, z. B. einer Sitzwanne, sowie ggf. eines hierauf sitzenden Insassen) besonders belastet werden. Daher sind die Deformationsbereiche jeweils entlang des Umfanges der Lageröffnung 1 gleichmäßig verteilt, damit unabhängig von der Schwenklage des Lagerhebels T eine gleichmäßige radiale Abstützung des Lagerbolzens 2 in der Lageröffnung 1 gewährleistet ist.

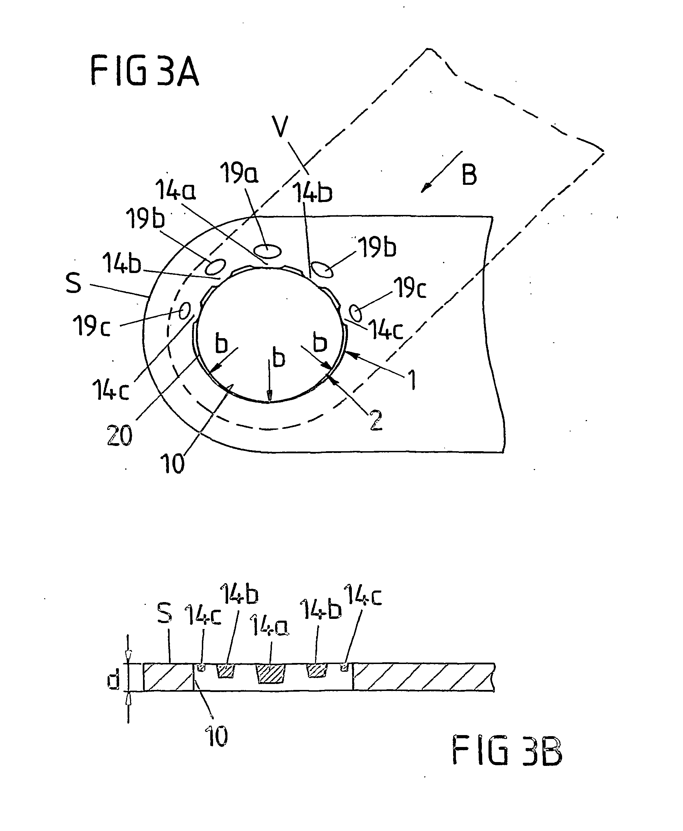

Figur 3a zeigt eine Lageranordnung, bei der die Lageröffnung 1 in einem drehfest angeordneten Sitzseitenteil S vorgesehen und der Lagerbolzen 2 schwenkbar in der Lageröffnung 1 gelagert ist. Ein Verstellhebel V einer Sitzverstelleinrichtung ist mit dem Lagerbolzen 2 drehfest verbunden und wird bei einer Drehbewegung des Lagerbolzens 2 gemeinsam mit diesem verschwenkt. Wird in diesem Fall der Verstellhebel V vorwiegend mit entlang einer Richtung von oben nach unten wirkenden Gewichtskräften B belastet, so wird der Rand 10 der Lageröffnung 1 überwiegend in seinem unteren Bereich durch entsprechende von dem Lagerbolzen 2 ausgeübte Kräfte b belastet. In diesem Fall ist es vorteilhaft, die Deformationsbereiche 14a, 14b, 14c und dementsprechend die zugeordneten Schwächungsbereiche 19a, 19b, 19c überwiegend im oberen, geringer belasteten Bereich des Randes 10 der Lageröffnung 1 vorzusehen, wie in Figur 3a erkennbar.

Aus den Figuren 3a und 3b geht ferner hervor, dass sich die Schwächungsbereiche 19a, 19b, 19c in Form von Materialverdrängungsbereichen (Aussparungen) und die Deformationsbereiche 14a, 14b, 14c jeweils über unterschiedliche Teile der Dicke d des Sitzseitenteiles S erstrecken, vergl. insbesondere Figur 3b. Dabei variieren die Schwächungsbereiche 19a, 19b, 19c sowohl hinsichtlich ihrer Querschnittsausdehnung als auch hinsichtlich ihrer Tiefe in axialer Richtung der Lageröffnung 1.

Die Montage der Lageranordnung erfolgt analog dem Ausführungsbeispiel aus den Figuren 2a bis 2c, d. h. es werden zunächst am Rand 10 der Lageröffnung 1 nach innen vorspringende Deformationsbereiche 14a, 14b, 14c durch Schaffung der Schwächungs- bzw. Materialverdrängungsbereiche 19a, 19b, 19c erzeugt und anschließend wird der Lagerbolzen 2 in die Lageröffnung 1 eingeführt, wobei die Deformationsbereiche teilweise verdrängt (rückverformt) werden, so dass das Material axial und/oder in Umfangsrichtung weg fließt sowie radial in die Materialverdrängungsbereiche zurück gestellt wird.

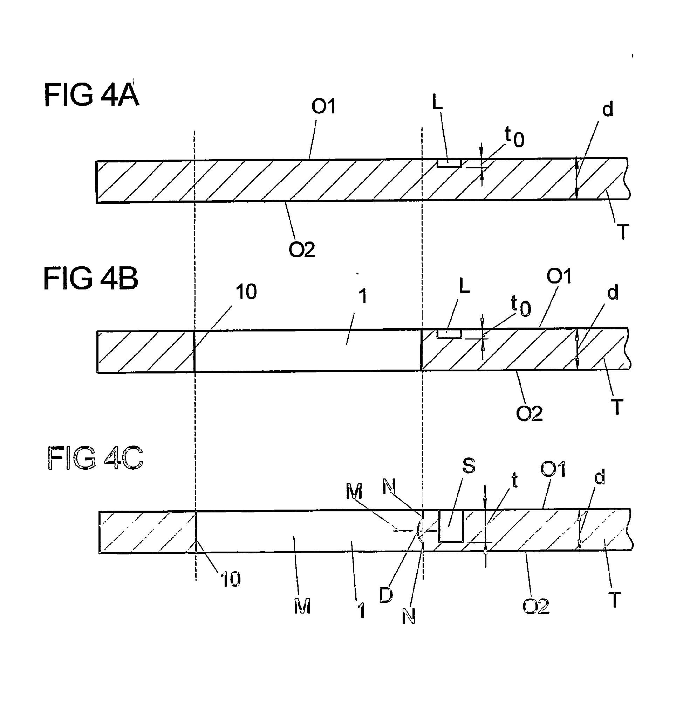

Figur 4a zeigt ein Blechteil T der Dicke d zwischen zwei Oberflächen O1, 02, bei dem es sich beispielsweise um einen Verstellhebel für ein zu verstellendes Sitzteil handeln kann. In dieses Blechteil T soll gemäß Figur 4b eine von einem im Querschnitt kreisförmigen Rand 10 begrenzte Lageröffnung 1 eingebracht werden. Vor dem Einbringen der Lageröffnung 1 werden jedoch gemäß Figur 4a in der Nähe des Randes 10 der späteren Lageröffnung 1, und zwar außerhalb der Lageröffnung 1, mit einem nicht-spanenden Verfahren, z. B. mittels eines Prägestempels, mindestens ein Sackloch L, vorzugsweise eine Mehrzahl Sacklöcher L, erzeugt, deren Tiefe t₀ vorzugsweise 20 % bis 30 % der Dicke d des Blechteiles T entspricht. Anschließend wird zunächst die Lageröffnung 1 in dem Blechteil T erzeugt (vgl. Figur 4b) und sodann durch Druck auf den Boden des Sackloches L ein Schwächungsbereich S in Form einer Materialverdrängungsstelle der Tiefe t erzeugt, wobei das verdrängte Material einen radial nach innen vorspringenden Deformationsbereich D am Rand 10 der Lageröffnung 1 erzeugt. Dieser Deformationsbereich D ist symmetrisch bezüglich einer Mittelebene M der Lageröffnung 1 (senkrecht zur Axialen der Lageröffnung ausgerichtete Ebene) ausgebildet und weist, in axialer Richtung der Lageröffnung 1 betrachtet, an seinen Enden jeweils nicht deformierte Abschnitte N auf, die sich unmittelbar an jeweils eine Oberfläche O1, O2 des Blechteiles T anschließen.

Das in den Figuren 4a bis 4c dargestellte Verfahren beruht auf dem technischen Prinzip, in einem Basisteil vor dem Einbringen einer Lageröffnung nahe des späteren Randes dieser Lageröffnung zunächst mindestens ein Sackloch, vorzugsweise mehrere Sacklöcher entlang des Umfangs der späteren Lageröffnung, zu erzeugen, sodann die Lagerlöffnung in das Basisteil einzubringen und schließlich die gewünschten, radial nach innen vorspringenden Deformationsbereiche am Rand des Sackloches durch zusätzliche Materialverdrängung im Bereich des Sackloches zu erzeugen, indem mit einem geeigneten Werkzeug, z. B. einem Stempel, auf das Sackloch eingewirkt wird.

Die hierbei erzeugten mittigen Deformationsbereiche D haben auf Grund ihrer symmetrischen Ausbildung bezüglich der Mittelebene M der Lageröffnung 1 und bezüglich ihres Überganges in axialer Richtung in jeweils einen nicht deformierten Abschnitt N den Vorteil, dass bei der Montage einer Lageranordnung das jeweilige Lagerelement (Lagerbolzen) von beiden Seiten her, also wahlweise von der einen Oberfläche O1 oder der anderen Oberfläche 02 des Basisteiles T her, in die Lageröffnung eingefügt werden kann. Hierdurch ist es nicht erforderlich, für unterschiedliche Einsatzzwecke (je nach Einführrichtung des Lagerelementes in die Lageröffnung) unterschiedliche Varianten des mit einer Lageröffnung versehenen Basisteiles bereitzuhalten, sondern es kann vielmehr ein und derselbe Typ eines Basisteiles unabhängig von der Einführrichtung des Lagerbolzens verwendet werden (keine unterschiedlichen "Rechts- und Linksvarianten").

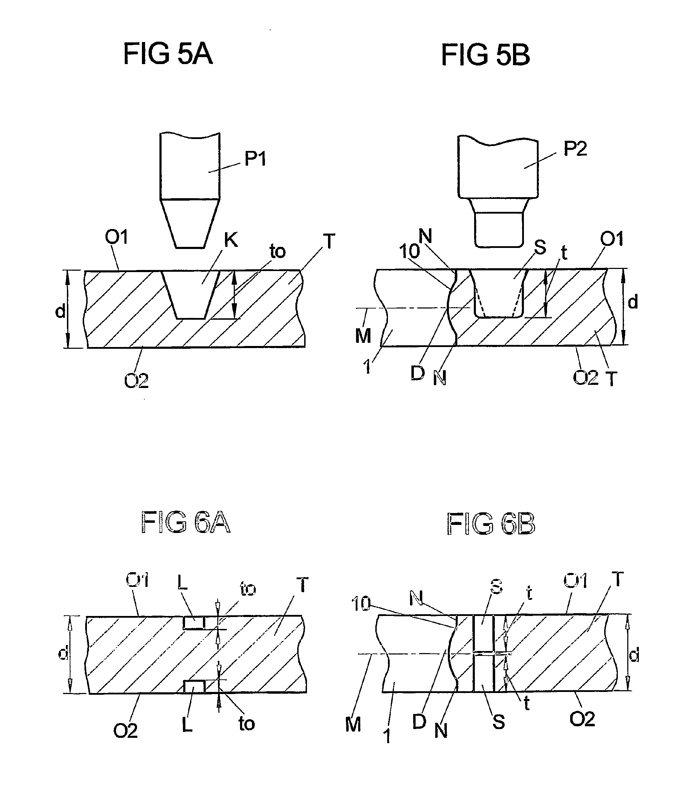

Während bei dem anhand der Figuren 4a bis 4c dargestellten Ausführungsbeispiel der Deformationsbereich D durch Einwirkung auf den Boden des Sackloches L erzeugt wird, geschieht dies bei dem in den Figuren 5a und 5b dargestellten Ausführungsbeispiel durch Einwirkung auf die seitlichen Begrenzungswände eines konischen Sackloches K.

Das konische Sackloch K einer Tiefe t₀ wird mittels eines ersten, konisch auslaufenden Prägestempels P1 erzeugt, vergleiche Figur 5a. Nach Bildung einer Lageröffnung in dem Blechteil T wird dann das konische Sackloch K mittels eines zweiten Prägestempels P2 mit einem zylinderförmigen Prägebereich aufgeweitet, so dass ein zylindrischer Schwächungsbereich S in Form einer Materialverdrängungsstelle gebildet wird. Das verdrängte Material dient zur Schaffung eines Deformationsbereiches D am Rand 10 der Lageröffnung 1, welcher von diesem Rand radial nach innen vorspringt und an seinen Enden jeweils nicht deformierte Abschnitte N aufweist. Auch hierbei handelt es sich um einen mittigen Deformationsbereich D, der symmetrisch bezüglich der Mittelebene M der Lageröffnung 1 ausgebildet ist.

Bei der in den Figuren 6a und 6b dargestellten Variante werden in ein Blechteil T vor dem Einbringen einer Lageröffnung zwei einander gegenüberliegende Sacklöcher L in der Nähe des späteren Randes 10 der Lageröffnung 1 eingebracht, die jeweils mit der Tiefe t₀ von einer der beiden Oberflächen O1, O2 in Richtung auf das Innere des Bleches T der Dicke d gerichtet sind, vergleiche Figur 6a. Anschließend wird zunächst die von dem Rand 10 begrenzte Lageröffnung 1 erzeugt und sodann wird aus den beiden Sacklöchern zur Bildung eines Schwächungs-/Materialverdrängungsbereiches S jeweils Material verdrängt, indem mit einem geeigneten Stempel Druck auf den Boden des jeweiligen Sackloches L ausgeübt wird. Das verdrängte Material bildet gemäß Figur 6b einen mittigen Deformationsbereich D am Rand 10 der Lageröffnung 1, der radial nach innen vorsteht und axial, zu den Oberflächen O1, O2 des Blechteiles T hin, in nicht deformierte Abschnitte N übergeht, vergleiche Figur 6b. Dabei können selbstverständlich mehrere derartig,e paarweise einander gegenüberliegende Schwächungs-/ Materialverdrängungsbereiche S entlang des Umfangs der Lageröffnung 1 (gleichmäßig) verteilt sein.

Die anhand der Figuren 6a und 6b dargestellte Variante hat den Vorteil, dass aufgrund der beidseitigen Einwirkung auf das Blechteil T, von beiden Oberflächen O1, 02 her, eine besondere Genauigkeit bei der Schaffung eines symmetrischen, mittigen Deformationsbereiches D zu erwarten ist.

## Patentansprüche

1. Lageranordnung für eine Verstelleinrichtung in einem Kraftfahrzeug mit
- einer Lagerstelle in Form einer Lageröffnung eines Basisteiles und
- einem die Lageröffnung durchgreifenden Lagerelement,
**dadurch gekennzeichnet,**
**dass** das Basisteil (S, T) am Rand (10) der Lageröffnung (1) mindestens einen Deformationsbereich (11, 12, 13, 14, 14a, 14b, 14c) aufweist, der aufgrund ^^plastischer Deformation von dem Rand (10) radial nach innen absteht und als radiale Stütze für das Lagerelement (2) wirkt.

2. Lageranordnung nach Anspruch 1, **dadurch gekennzeichnet, dass** der mindestens eine Deformationsbereich (11, 12, 13, 14, 14a, 14b, 14c) im Vergleich zu den weiteren, radial nicht nach innen verlagerten Bereichen des Randes (10) der Lageröffnung (1) eine geringere Steifigkeit gegenüber radial wirkenden Kräften aufweist.

3. Lageranordnung nach Anspruch 1 oder 2, **dadurch gekennzeichnet, dass** dem Deformationsbereich (11, 12, 13, 14, 14a, 14b, 14c) mindestens ein Schwächungsbereich (16, 16a, 16b; 17, 17a, 17b; 18, 18a, 18b; 19; 19a, 19b, 19c) des Bauteiles (S, T) auf der der Lageröffnung (1) abgewandten Seite des Deformationsbereiches (11, 12, 13, 14, 14a, 14b, 14c) zugeordnet ist.

4. Lageranordnung nach einem der vorhergehenden Ansprüche, **dadurch gekennzeichnet, dass** der Deformationsbereich (D) symmetrisch bezüglich einer Mittelebene (M) der Lageröffnung (1) ausgebildet ist und in axialer Richtung an seinen beiden Enden in jeweils einen radial nicht nach innen abstehenden Abschnitt (N) des Randes (10) der Lageröffnung (1) übergeht.

5. Lageranordnung nach einem der vorhergehenden Ansprüche, **dadurch gekennzeichnet**, das mehrere Deformationsbereiche (11, 12, 13, 14, 14a, 14b, 14c) entlang des Randes (10) entlang der Lageröffnung (1) hintereinander angeordnet sind.

6. Langeranordnung nach Anspruch 5, **dadurch gekennzeichnet, dass** die Deformationsbereiche (11, 12, 13, 14) entlang des gesamten Umfanges der Lageröffnung (1) verteilt sind.

7. Lageranordnung nach Anspruch 5, **dadurch gekennzeichnet, dass** die Deformationsbereiche (14a, 14b, 14c) nur entlang eines Teiles des Umfanges der Lageröffnung (1) angeordnet sind, insbesondere entlang desjenigen Teiles, an dem im Betrieb der Lageranordnung die vergleichsweise geringeren Radialkräfte wirken.

8. Lageranordnung nach einem der Ansprüche 3 bis 7, **dadurch gekennzeichnet, dass** jedem Deformationsbereich (11, 12, 13, 14, 14a, 14b, 14c) mindestens ein Schwächungsbereich (16, 16a, 16b; 17, 17a, 17b; 18, 18a, 18b; 19; 19a, 19b, 19c) zugeordnet ist.

9. Lageranordnung nach Anspruch 3 oder einem der Ansprüche 4 bis 8 soweit rückbezogen auf Anspruch 3, **dadurch gekennzeichnet, dass** der Schwächungsbereich (16a, 16b; 17a, 17b; 18a, 18b; 19; 19a, 19b, 19c) mindestens eine Ausnehmung des Bauteiles (S, T) umfasst.

10. Lageranordnung nach Anspruch 9, **dadurch gekennzeichnet, dass** die Ausnehmung (16a, 16b; 17a, 17b; 18a, 18b) als Durchgangsöffnung ausgebildet ist.

11. Lageranordnung nach Anspruch 9, **dadurch gekennzeichnet, dass** die Ausnehmung (19; 19a, 19b, 19c) durch eine Aussparung, z. B. in Form eines sacklochartigen Materialverdrängungsbereiches, gebildet wird.

12. Lageranordnung nach Anspruch 8 und 11, **dadurch gekennzeichnet, dass** die Aussparungen (19a, 19b, 19c) unterschiedliche Tiefe in axialer Richtung der Lageröffnung (1) aufweisen.

13. Lageranordnung nach einem der Ansprüche 9 bis 12, **dadurch gekennzeichnet, dass** die Ausdehnung (t) des Deformationsbereiches (11, 12, 13, 14, 14a, 14b, 14c) in axialer Richtung der Lageröffnung (1) mit der Tiefe und/oder Breite der Ausnehmung (16a, 16b; 17a, 17b; 18a, 18b; 19; 19a, 19b, 19c) korrespondiert.

14. Lageranordnung nach einem der Ansprüche 3 bis 13, **dadurch gekennzeichnet, dass** sich der mindestens eine Schwächungsbereich (16, 16a, 16b; 17, 17a, 17b; 18, 18a, 18b; 19; 19a, 19b, 19c) entlang des Randes (10) der Lageröffnung (1) erstreckt.

15. Lageranordnung nach einem der Ansprüche 3 bis 14, **dadurch gekennzeichnet, dass** dem Deformationsbereich (11, 12, 13) zwei durch einen Steg (16, 17, 18) voneinander getrennte Teilbereiche (16a, 16b; 17a, 17b; 18a, 18b) eines Schwächungsbereichs (16, 16a, 16b; 17, 17a, 17b; 18, 18a, 18b; 19; 19a, 19b, 19c) zugeordnet sind.

16. Lageranordnung nach Anspruch 15, **dadurch gekennzeichnet, dass** der Deformationsbereich (11, 12, 13) zwischen dem Steg (16, 17, 18) und der Lageröffnung (1) liegt.

17. Lageranordnung nach einem der vorhergehenden Ansprüche, **dadurch gekennzeichnet, dass** sie zur Lagerung eines Verstellelementes (T, V) einer Verstelleinrichtung für einen Kraftfahrzeugsitz, insbesondere eines Verstellhebels, an einem tragenden Sitzteil (S), insbesondere einem Sitzseitenteil dient.

18. Lageranordnung nach einem der vorhergehenden Ansprüche, **dadurch gekennzeichnet, dass** das Lagerelement (2) als Lagerbolzen ausgebildet ist.

19. Lageranordnung nach Anspruch 18, **dadurch gekennzeichnet, dass** der Lagerbolzen (2) einen Lagerabschnitt (20), z. B. in Form eines Bundes, sowie einen Verbindungsabschnitt (25), z. B. in Form eines Gewindeabschnittes, aufweist.

20. Verfahren zur Herstellung einer Lageranordnung nach einem der vorhergehenden Ansprüche,
**dadurch gekennzeichnet,**
**dass** der mindestens eine Deformationsbereich (11, 12, 13, 14, 14a, 14b, 14c) derart verformt wird, dass er das Lagerelement (2) radial abstützt.

21. Verfahren nach Anspruch 20, **dadurch gekennzeichnet, dass** der mindestens eine Deformationsbereich (11, 12, 13) nach dem Einführen des Lagerelementes (2) in die Lageröffnung (1) nach innen verformt wird, so dass er das Lagerelement (2) radial abstützt.

22. Verfahren nach Anspruch 21, **dadurch gekennzeichnet, dass** der Deformationsbereich (11, 12, 13) durch Einwirkung äußerer Kräfte - bezogen auf die Lageröffnung (1) - radial nach innen verformt wird.

23. Verfahren nach Anspruch 22, **dadurch gekennzeichnet, dass** der Deformationsbereich (11, 12, 13) mittels eines Werkzeugs, das radial nach innen wirkende Kräfte erzeugt, z. B. durch Körnerschlag, verformt wird.

24. Verfahren nach einem der Ansprüche 21 bis 23, **dadurch gekennzeichnet, dass** die Querschnittsabmessung der Lageröffnung (1) vor dem Verformen des mindestens einem Deformationsbereiches (11, 12, 13) ein Übermaß bezogen auf die Querschnittsabmessung des Lagerabschnittes (20) des Lagerelementes (2) aufweist.

25. Verfahren nach Anspruch 20, **dadurch gekennzeichnet, dass** der Deformationsbereich (14, 14a, 14b, 14c) vor dem Einführen des Lagerelementes (2) in die Lageröffnung (1) derart verformt wird, dass er von dem Rand (10) der Lageröffnung (1) radial nach innen absteht.

26. Verfahren nach Anspruch 25, **dadurch gekennzeichnet, dass** der Deformationsbereich (14, 14a, 14b, 14c) beim Einführen des Lagerelementes (2) in die Lageröffnung (1) erneut verformt wird, so dass er spielfrei an dem Lagerelement (2) anliegt.

27. Verfahren nach Anspruch 25 oder 26, **dadurch gekennzeichnet, dass** die äußere Querschnittsabmessung des Lagerabschnittes (20) des Lagerelementes (2) so groß gewählt ist, dass das Lagerelement (2) nur unter teilweiser radialer Rückverformung des Deformationsbereiches (14, 14a, 14b, 14c) nach außen in die Lageröffnung (1) einführbar ist.

28. Verfahren nach einem der Ansprüche 25 bis 27, **dadurch gekennzeichnet, dass** der Deformationsbereich (14, 14a, 14b, 14c) durch das Lagerelement (2) verformt wird.

29. Verfahren nach einem der Ansprüche 20 bis 28, **dadurch gekennzeichnet, dass** vor der Erzeugung der Lageröffnung (1) in dem Basisteil (T) entlang des späteren Randes (10) der Lageröffnung (1) mindestens eine Aussparung (K, L) eingebracht wird.

30. Verfahren nach Anspruch 29, **dadurch gekennzeichnet, dass** nach der Bildung der Lageröffnung (1) in dem Basisteil (10) auf die Aussparung (K, L) mittels eines Werkzeugs (P1, P2) derart eingewirkt wird, dass am Rand (10) der Lageröffnung (1) ein Deformationsbereich (D) entsteht.

31. Verfahren nach Anspruch 30, **dadurch gekennzeichnet, dass** der Deformationsbereich (D) symmetrisch bezüglich der Mittelebene (M) der Lageröffnung (1) ausgebildet ist und in axialer Richtung an seinen Enden jeweils in einen radial nicht vortretenden Abschnitt (N) des Randes (10) der Lageröffnung (1) übergeht.

32. Verfahren nach einem der Ansprüche 20 bis 31, **dadurch gekennzeichnet, dass** zur Lagerung des Lagerelementes (2) in der Lageröffnung (1) ein Lagerabschnitt (20) des Lagerelementes (2) verwendet wird.

## Claims

1. Bearing arrangement for an adjusting device in a motor vehicle with
- a bearing point in the form of a bearing opening of a base part and
- a bearing element engaging through the bearing opening,
**characterised in that**
the base part (S, T) has on the edge (10) of the bearing opening (1) at least one deformation area (11, 12, 13, 14, 14a, 14b, 14c,) which as a result of plastic deformation protrudes radially inwards from the edge (10) and acts as a radial support for the bearing element (2).

2. Bearing arrangement according to claim 1, **characterised in that** the at least one deformation area (11, 12, 13, 14, 14a, 14b, 14c) has in comparison to the further radially not inwardly displaced areas of the edge (10) of the bearing opening (1) a lesser rigidity in respect of radially acting forces.

3. Bearing arrangement according to claim 1 or 2, **characterised in that** the deformation area (11, 12, 13, 14, 14a, 14b, 14c) is associated with at least one weakened area (16,16a, 16b; 17, 17a, 17b; 18, 18a, 18b; 19, 19a, 19b, 19c) of the component part (S, T) on the side of the deformation area (11, 12, 13, 14, 14a, 14b, 14c) remote from the bearing opening (1).

4. Bearing arrangement according to one of the preceding claims, **characterised in that** the deformation area (D) is formed symmetrical relative to a central plane (M) of the bearing opening (1) and changes axially at its two ends into radially not inwardly protruding sections (N) on the edge (10) of the bearing opening (1).

5. Bearing arrangement according to one of the preceding claims, **characterised in that** several deformation areas (11, 12, 13, 14, 14a, 14b, 14c) are arranged in succession along the edge (10) along the bearing opening (1).

6. Bearing arrangement according to claim 5, **characterised in that** the deformation areas (11, 12, 13, 14) are spread out round the entire perimeter of the bearing opening (1).

7. Bearing arrangement according to claim 5, **characterised in that** the deformation areas (14a, 14b, 14c) are disposed only along a part of the perimeter of the bearing opening (1), more particularly along that part on which during operation of the bearing arrangement the comparatively lower radial forces act.

8. Bearing arrangement according to one of claims 3 to 7, **characterised in that** each deformation area (11, 12, 13, 14, 14a, 14b, 14c) is associated with a weakened area (16,16a, 16b; 17, 17a, 17b; 18, 18a, 18b; 19, 19a, 19b, 19c).

9. Bearing arrangement according to claim 3 or one of claims 4 to 8 as well as in relation to claim 3, **characterised in that** the weakened area (16a, 16b; 17a, 17b; 18a, 18b; 19, 19a, 19b, 19c) comprises at least one recess of the component part (S, T).

10. Bearing arrangement according to claim 9, **characterised in that** the recess (16a, 16b; 17a, 17b; 18a, 18b) is formed as a through opening.

11. Bearing arrangement according to claim 9, **characterised in that** the recess (19; 19a, 19b, 19c) is formed through a recess, e.g. in the form of a blind-hole type material displacement area.

12. Bearing arrangement according to claim 8 and 11, **characterised in that** the recesses (19a, 19b, 19c) have different depth in the axial direction of the bearing opening (1).

13. Bearing arrangement according to one of claims 9 to 12, **characterised in that** the extension (t) of the deformation area (11, 12, 13, 14, 14a, 14b, 14c) in the axial direction of the bearing opening (1) corresponds with the depth and/or width of the recess (16a,16; 17a, 17b; 18a, 18b; 19; 19a, 19b, 19c).

14. Bearing arrangement according to one of claims 3 to 13, **characterised in that** the at least one weakened area (16, 16a, 16b; 17, 17a, 17b; 18, 18a, 18b; 19, 19a, 19b, 19c) extends along the edge (10) of the bearing opening (1).

15. Bearing arrangement according to one of claims 3 to 14, **characterised in that** the deformation area (11, 12, 13) is associated with two partial areas (16a, 16b; 17a, 17b; 18a, 18b) of a weakened area (16, 16a, 16b; 17, 17a, 17b; 18, 18a, 18b; 19; 19a, 19b, 19c) separated from each other by a web (16, 17, 18).

16. Bearing arrangement according to claim 15, **characterised in that** the deformation area (11,12, 3) lies between the web (16, 17, 18) and the bearing opening (1).

17. Bearing arrangement according to one of the preceding claims, **characterised in that** it serves to support an adjusting element (T, V) of an adjusting device for a motor vehicle seat, more particularly an adjusting lever, on a supporting seat part (S), more particularly a seat side part.

18. Bearing arrangement according to one of the preceding claims, **characterised in that** the bearing element (2) is deigned as a bearing bolt.

19. Bearing arrangement according to claim 18, **characterised in that** the bearing bolt (2) has a bearing section (20) e.g. in the form of a collar, as well as a connecting section (25) e.g. in the form of a threaded section.

20. Method for manufacturing a bearing arrangement according to one of the preceding claims,
**characterised in that**
the at least one deformation area (11, 12, 13, 14, 14a, 14b, 14c) is deformed so that it radially supports the bearing element (2).

21. Method according to claim 20, **characterised in that** the at least one deformation area (11, 12, 3) is deformed inwards after inserting the bearing element (2) into the bearing opening (1) so that it radially supports the bearing element (2).

22. Method according to claim 21, **characterised in that** the deformation area (11, 12, 13) is deformed radially inwards through the action of external forces - in relation to the bearing opening (1) -.

23. Method according to claim 22, **characterised in that** the deformation area (11, 12, 13) is deformed by means of a tool which creates radially inwardly acting forces, e.g. a prick punch.

24. Method according to one of claims 21 to 23, **characterised in that** the cross-sectional dimensions of the bearing opening (1) prior to deformation of the at least one deformation area (11, 12, 13) has an oversize in relation to the cross-sectional dimension of the bearing section (20) of the bearing element (2).

25. Method according to claim 20, **characterised in that** the deformation area (14, 14a, 14b, 14c) is deformed prior to the insertion of the bearing element (2) into the bearing opening (1) so that it protrudes radially inwards from the edge (10) of the bearing opening (1).

26. Method according to claim 25, **characterised in that** the deformation area (14, 14a, 14b, 14c) is deformed again as the bearing element (2) is inserted into the bearing opening (1) so that it bears free of play against the bearing element (2).

27. Method according to claim 25 or 26, **characterised in that** the outer cross-sectional dimension of the bearing section (20) of the bearing element (2) is selected large enough so that the bearing element (2) can only be inserted into the bearing opening (1) with a partial radial return of the deformation area (14, 14a, 14b, 14c) outwards.

28. Method according to one of claims 25 to 27, **characterised in that** the deformation area (14,14a, 14b, 14c) is deformed through the bearing element (2).

29. Method according to one of claims 20 to 28, **characterised in that** before producing the bearing opening (1) in the base part (T) at least one recess (K, L) is created along the subsequent edge (10) of the bearing opening (1) .

30. Method according to claim 29, **characterised in that** after forming the bearing opening (1) in the base part (T) action is applied to the recess (K, L) by means of a tool (P1, P2) so that a deformation area (D) is produced on the edge (10) of the bearing opening (1).

31. Method according to claim 30, **characterised in that** the deformation area (D) is formed symmetrical relative to the central plane (M) of the bearing opening (1) and changes in the axial direction at the ends into radially non-protruding sections (N) of the edge (10) of the bearing opening (1).

32. Method according to one of claims 20 to 31, **characterised in that** a bearing section (20) of the bearing element (2) is used to mount the bearing element (2) in the bearing opening (1).

## Revendications

1. Ensemble palier pour un dispositif de déplacement dans un véhicule automobile, comportant
- un emplacement de montage sous la forme d'une ouverture de palier d'une pièce de base, et
- un élément de palier traversant l'ouverture de palier,
**caractérisé en ce que**
la pièce de base (S, T) au bord (10) de l'ouverture de palier (1), présente au moins une zone de déformation (11, 12, 13, 14, 14a, 14b, 14c) qui fait saillie depuis le bord (10) radialement vers l'intérieur suite à une déformation plastique et qui fait office de soutien radial pour l'élément de palier (2).

2. Ensemble palier selon la revendication 1, **caractérisé en ce que** ladite au moins une zone de déformation (11, 12, 13, 14, 14a, 14b, 14c) présente une rigidité par rapport aux forces agissant radialement, qui est inférieure par comparaison aux autres zones du bord (10) de l'ouverture de palier (1) qui ne sont pas déplacées radialement vers l'intérieur.

3. Ensemble palier selon la revendication 1 ou 2, **caractérisé en ce qu'**à la zone de déformation (11, 12, 13, 14, 14a, 14b, 14c) est associée au moins une zone d'affaiblissement (16, 16a, 16b ; 17, 17a, 17b ; 18, 18a, 18b ; 19 ; 19a, 19b, 19c) du composant (S, T) sur le côté de la zone de déformation (11, 12, 13, 14, 14a, 14b, 14c) détourné de l'ouverture de palier (1).

4. Ensemble palier selon l'une des revendications précédentes, **caractérisé en ce que** la zone de déformation (D) est réalisée avec une symétrie par rapport à un plan médian (M) de l'ouverture de palier (1) et se transforme en direction axiale, à ses deux extrémités, en une portion respective (N) du bord (10) de l'ouverture de palier (1), qui ne fait pas saillie radialement vers l'intérieur.

5. Ensemble palier selon l'une des revendications précédentes, **caractérisé en ce que** plusieurs zones de déformation (11, 12, 13, 14, 14a, 14b, 14c) sont agencées les unes derrière les autres le long du bord (10) le long de l'ouverture de palier (1).

6. Ensemble palier selon la revendication 5, **caractérisé en ce que** les zones de déformation (11, 12, 13, 14) sont réparties le long de toute la périphérie de l'ouverture de palier (1).

7. Ensemble palier selon la revendication 5, **caractérisé en ce que** les zones de déformation (14a, 14b, 14c) sont agencées uniquement le long d'une partie de la périphérie de l'ouverture de palier (1), en particulier le long de la partie au niveau de laquelle agissent des forces radiales comparativement faibles pendant le fonctionnement de l'ensemble palier.

8. Ensemble palier selon l'une des revendications 3 à 7, **caractérisé en ce qu'**à chaque zone de déformation (11, 12, 13, 14, 14a, 14b, 14c) est associée au moins une zone d'affaiblissement (16, 16a, 16b ; 17, 17a, 17b ; 18, 18a, 18b ; 19 ; 19a, 19b, 19c).

9. Ensemble palier selon la revendication 3 ou selon l'une des revendications 4 à 8 prise en dépendance de la revendication 3, **caractérisé en ce que** la zone d'affaiblissement (16a, 16b ; 17a, 17b ; 18a, 18b ; 19 ; 19a, 19b, 19c) présente au moins un évidement du composant (S, T).

10. Ensemble palier selon la revendication 9, **caractérisé en ce que** l'évidement (16a, 16b ; 17a, 17b ; 18a, 18b) est réalisé sous forme d'ouverture traversante.

11. Ensemble palier selon la revendication 9, **caractérisé en ce que** l'évidement (19 ; 19a, 19b, 19c) est formé par une échancrure, par exemple sous la forme d'une zone de refoulement de matériau en forme de trou borgne.

12. Ensemble palier selon la revendication 8 et 11, **caractérisé en ce que** les échancrures (19a, 19b, 19c) présentent différentes profondeurs en direction axiale de l'ouverture de palier (1).

13. Ensemble palier selon l'une des revendications 9 à 12, **caractérisé en ce que** l'extension (t) de la zone de déformation (11, 12, 13, 14, 14a, 14b, 14c) en direction axiale de l'ouverture de palier (1) correspond à la profondeur et/ou à la largeur de l'évidement (16a, 16b ; 17a, 17b ; 18a, 18b ; 19 ; 19a, 19b, 19c).

14. Ensemble palier selon l'une des revendications 3 à 13, **caractérisé en ce que** ladite au moins une zone d'affaiblissement (16, 16a, 16b ; 17, 17a, 17b ; 18, 18a, 18b ; 19 ; 19a, 19b, 19c) s'étend le long du bord (10) de l'ouverture de palier (1).

15. Ensemble palier selon l'une des revendications 3 à 14, **caractérisé en ce qu'**à la zone de déformation (11, 12, 13) sont associées deux zones partielles (16a, 16b ; 17a, 17b ; 18a, 18b), séparées par une barrette (16, 17, 18), d'une zone d'affaiblissement (16, 16a, 16b ; 17, 17a, 17b ; 18, 18a, 18b ; 19 ; 19a, 19b, 19c).

16. Ensemble palier selon la revendication 15, **caractérisé en ce que** la zone de déformation (11, 12, 13) se situe entre la barrette (16, 17, 18) et l'ouverture de palier (1).

17. Ensemble palier selon l'une des revendications précédentes, **caractérisé en ce qu'**il sert au montage d'un élément de déplacement (T, V) d'un dispositif de déplacement pour un siège de véhicule automobile, en particulier un levier de déplacement, sur une partie de siège porteuse (S), en particulier une partie de siège latérale.

18. Ensemble palier selon l'une des revendications précédentes, **caractérisé en ce que** l'élément de palier (2) est réalisé sous forme de boulon de palier.

19. Ensemble palier selon la revendication 18, **caractérisé en ce que** le boulon de palier (2) comprend une portion de palier (20), par exemple sous la forme d'une collerette, ainsi qu'une portion de liaison (25), par exemple sous la forme d'une portion à pas de vis.

20. Procédé pour réaliser un ensemble palier selon l'une des revendications précédentes, **caractérisé en ce que** ladite au moins une zone de déformation (11, 12, 13, 14, 14a, 14b, 14c) est déformée de manière à supporter radialement l'élément de palier (2).

21. Procédé selon la revendication 20, **caractérisé en ce qu'**après insertion de l'élément de palier (2) dans l'ouverture de palier (1), ladite au moins une zone de déformation (11, 12, 13) est déformée vers l'intérieur de manière à supporter radialement l'élément de palier (2).

22. Procédé selon la revendication 21, **caractérisé en ce que** la zone de déformation (11, 12, 13) est déformée radialement vers l'intérieur par rapport à l'ouverture de palier (1) par l'action de forces extérieures.

23. Procédé selon la revendication 22, **caractérisé en ce que** la zone de déformation (11, 12, 13) est déformée au moyen d'un outil qui génère des forces agissant radialement vers l'intérieur, par exemple par un coup de pointeau.

24. Procédé selon l'une des revendications 21 à 23, **caractérisé en ce qu'**avant la déformation de ladite au moins une zone de déformation (11, 12, 13), la dimension en section transversale de l'ouverture de palier (1) correspond à une sur-dimension par rapport à la dimension en section transversale de la portion de palier (20) de l'élément de palier (2).

25. Procédé selon la revendication 20, **caractérisé en ce qu'**avant l'insertion de l'élément de palier (2) dans l'ouverture de palier (1), la zone de déformation (14, 14a, 14b, 14c) est déformée de manière à faire saillie depuis le bord (10) de l'ouverture de palier (1) radialement vers l'intérieur.

26. Procédé selon la revendication 25, **caractérisé en ce que** lors de l'insertion de l'élément de palier (2) dans l'ouverture de palier (1), la zone de déformation (14, 14a, 14b, 14c) est déformée de nouveau de manière à prendre appui sans jeu contre l'élément de palier (2).

27. Procédé selon la revendication 25 ou 26, **caractérisé en ce que** la dimension extérieure en section transversale de la portion de palier (20) de l'élément de palier (2) est choisie aussi importante que l'élément de palier (2) est susceptible d'être inséré dans l'ouverture de palier (1) uniquement sous re-déformation radiale partielle de la zone de déformation (14, 14a, 14b, 14c) vers l'extérieur.

28. Procédé selon l'une des revendications 25 à 27, **caractérisé en ce que** la zone de déformation (14, 14a, 14b, 14c) est déformée par l'élément de palier (2).

29. Procédé selon l'une des revendications 20 à 28, **caractérisé en ce qu'**avant la réalisation de l'ouverture de palier (1) dans la partie de base (T), on ménage au moins une échancrure (K, L) le long du bord ultérieur (10) de l'ouverture de palier (1).

30. Procédé selon la revendication 29, **caractérisé en ce qu'**après la formation de l'ouverture de palier (1) dans la partie de base (10), on agit sur l'échancrure (K, L) au moyen d'un outil (P1, P2) de telle sorte qu'une zone de déformation (D) se produit au bord (10) de l'ouverture de palier (1).

31. Procédé selon la revendication 30, **caractérisé en ce que** la zone de déformation (D) est réalisée symétriquement par rapport au plan médian (M) de l'ouverture de palier (1) et se transforme, en direction axiale, à ses extrémités, en une portion respective (N) du bord (10) de l'ouverture de palier (1), portion qui ne fait pas saillie radialement.

32. Procédé selon l'une des revendications 20 à 31, **caractérisé en ce que** pour le montage de l'élément de palier (2) dans l'ouverture de palier (1), on utilise une portion de palier (20) de l'élément de palier (2).
